# EUROPÄISCHE PATENTSCHRIFT

(11) **EP 0 765 743 B1**
(45) Veröffentlichungstag und Bekanntmachung des Hinweises auf die Patenterteilung: **02.05.2003**
(21) Anmeldenummer: 96112992.1
(22) Anmeldetag: 13.08.1996
(51) Int. Cl.: C09J 7/02, C09D 133/04, C09J 133/04, B32B 31/12

(54) **Leicht auflösbare Verbundfolie und Verfahren zu ihrer Herstellung**
Readily soluble laminated film and preparation process therefor
Film laminé facilement soluble, et son procédé de fabrication

(30) Priorität: 28.09.1995 DE 19536048
(43) Veröffentlichungstag der Anmeldung: 02.04.1997
(73) Patentinhaber: RMH Polymers GmbH & Co. KG, 06258 Schkopau (DE)
(72) Erfinder: Hauk, Jürgen, Dr., 85354 Freising (DE); Hardeweg, Heike,, 46342 Velen (DE); Hüfftlein, Karlheinz, 70563 Stuttgart (DE); Schumacher, Rainer, Dr., 38299 Salzgitter-Barum (DE)
(74) Vertreter: Pauling, Hans-Jürgen

(56) Entgegenhaltungen:
- EP-A- 0 143 935
- EP-A- 0 316 676
- EP-A- 0 350 240
- EP-A- 0 619 352
- EP-A- 0 696 610
- DE-A- 3 809 335
- DE-U- 8 702 864
- US-A- 3 575 910
- US-A- 4 937 282

## Beschreibung

Die Erfindung betrifft eine leicht auflösbare Verbundfolie, die aus einer mit einem Klebstofffilm versehenen Trägerfolie besteht, auflösbar ist und ein Verfahren zu ihrer Herstellung.

Bekannt sind bereits selbstklebende Folien für verschiedene Anwendungsgebiete, teilweise verstärkt bzw. kombiniert mit Papier oder in Form von Laminaten. Diese bekannten Folien lassen sich jedoch schwierig auflösen und die Beseitigung ihrer Rückstände bereitet Probleme.

Aus der EP-A-0 316 676 ist eine in wässrigen Alkalien wiederauflösbare Klebefolie gemäß dem Oberbegriff des Anspruchs 1, d.h. eine Folie mit Klebstofffilm für Etiketten u.ä. bekannt, die aus Acrylat-Copolymerisaten besteht. Die Ausgangsprodukte für eine solche Klebefolie in Form von Granulaten werden in speziellen Reaktionsextrudern polymerisiert und anschließend durch Kompoundierung mit Pigmenten versetzt und danach als Flachfolie extrudiert. Durch die Extrusionstechnologie wird diese Klebefolie zumindestens in einer Richtung gereckt und ist somit nicht universell anwendbar. Die mittleren Molmassen dieser Klebefolie betragen max. 100.000.

Eine ähnliche Lösung ist auch in der EP-A-0 143 935 beschrieben. Auch hier werden Produkte erhalten, die mindestens in einer Richtung gedehnt sind. Als Vorzug dieser Produkte wird besonders das Rückstellvermögen bzw. eine Schrumpffähigkeit der Folie in Wasser bezeichnet.

Weiterhin sind aus der US-A-4 937 282 Acrylat-Copolymerisate für ähnliche Verwendungen bekannt, die jedoch nur in begrenztem Masse wieder auflösbar sind.

Die bekannten Lösungen sind aufgrund ihrer Herstellung nicht formbeständig und somit nicht allseitig einsetzbar.

Der Erfindung liegt das Problem zugrunde, eine leicht auflösbare Verbundfolie, bestehend auf einer Trägerfolie mit Klebstofffilm zu entwickeln - die allseitig verwendbar ist. Ein weiteres Problem der Erfindung ist die Entwicklung eines Verfahrens zur Herstellung einer solchen Verbundfolie.

Gelöst werden diese Probleme durch die Merkmale der Patentansprüche 1 und 2.
Die leicht auflösbare Verbundfolie besteht aus einem Verbund aus einer Trägerfolie und einem Klebstofffilm. Sie ist dadurch gekennzeichnet, dass die Verbundfolie formbeständig und orientierungsfrei ist. Die Herstellung erfolgt ausgehend von wässrigen Acrylat-Copolymerdispersionen mit einem Feststoffgehalt von 40 bis 60 Gew-%.

Die Trägerfolie besteht aus eine Acrylat-Copolymerisat aus 20 bis 30 Gew-% Butylacrylat, 5 bis 10 Gew-% Methacrylsäure, 3 bis 5 Gew-% eines Acrylsäurealkylesters ab 6 C-Atome und 2 bis 7 Gew-% Styrol und/oder Siloxan, bezogen auf die Dispersion. Sie weist Molmassen im Bereich 80.000 bis 300.000 auf und wird in Schichtstärken von 10 bis 300 µm, vorzugsweise 50 bis 250 µm erzeugt.

Der Klebestofffilm besteht aus einem Acylat-Copolymerisat aus 30 bis 50 Gew-% Butylacrylat, 5 bis 10 Gew-% Acrylsäure und 1 bis 5 Gew-% Styrol, bezogen auf die Dispersion. Er weist Molmassen im Bereich von 10.000 bis 120.000 auf und wird in Schichtstärken von 5 bis 100 µm, vorzugsweise 20 bis 50µm aufgetragen.

Die daraus hergestellte Verbundfolie hat eine maximale Restfeuchte von 5 %.

Zur Herstellung einer leicht auflösbaren Verbundfolie aus einer Trägerfolie mit einem Klebstofffilm gemäß Patentanspruch 1 wird aus einem Behälter eine wässrige Dispersion mit 40 bis 60 % Feststoffgehalt eines Acrylat-Copolymerisates für die Trägerfolie mittels eines Rakels auf ein Siliconpapier aufgetragen und mit Heißluft getrocknet; sowie aus einem weiteren Behälter eine wässrige Dispersion eines Acrylat-Copolymerisates für den Klebstofffilm mit 40 bis 60 % Feststoffgehalt mittels eines Rakels auf ein Siliconpapier aufgetragen und mit Heißluft getrocknet.

In einem weiteren Verfahrensschritt werden die jeweils auf Siliconpapieren aufgetragenen Folien und Klebstofffilme mit 0,5 m/s durch ein Walzenpaar hindurchgeführt und bei 25 bis 50 °C Walzentemperatur und einem Druck von 200 N/cm² ein fester Verbund von Folie und Klebstofffilm erzeugt. Die Verbundfolie wird nachfolgend mit Siliconpapier, als Zwischenlage, einer Wiederverwendung zugeführt. Grundsätzlich ist es auch vorteilhafterweise möglich, für besondere Anwendungen die getrocknete Folie direkt mit der Klebstoffdispersion zu bestreichen und zu trocknen.

Die Dispersionen für Trägerfolie und Klebstofffilm sind Emulsionspolymerisate, unter üblichen, bekannten Bedingungen hergestellt. Durch die Auswahl von Spezialmonomeren, die funktionelle Gruppen aufweisen, können spezielle Eigenschaften des Verbundes eingestellt werden.

Die Verbundfolie ist wasserbeständig sowie beständig gegen verdünnte Carbonsäuren und stark verdünnte Säuren. Sie kann mit Industriereinigern abgewaschen bzw. aufgelöst werden.
Die Verbundfolie kann mit handelsüblichen Druckfarben z.B. im Flexodruck, Tampondruck oder Offsetdruck bedruckt werden. Sie ist auch geeignet für Etikettiersysteme mit wasserdispergierbarem Papier, für temporäre Abdeckungen von lackierten, bzw. vergüteten oder polierten Oberflächen und auch für temporäre Abdeckungen von Papieroder Textilmaterilien, bei denen eine formbeständige Fixierung erforderlich ist.

Die erfindungsgemäße Verbundfolie ist vielseitig einsetzbar und durch ihre Formbeständigkeit bzw. Orientierungsfreiheit auch für Drucke geeignet, bei denen eine exakte, gleichbleibende Wiedergabe, z.B. für die Anwendung des EAN-Code oder ähnlicher Codierungen, erforderlich ist. Die einfache Wiederentfernbarkeit ermöglicht auch den Einsatz bei Mehrwegtransportsystemen. Die verwendeten Acrylat-Copolymerisate gestatten auch die Verwendung im Lebensmittelbereich.

Die erfindungsgemäße Verbundfolie ist gegenüber den bekannten Lösungen vergleichsweise einfach und kostengünstig herzustellen.
Mit dem erfindungsgemäßen Verfahren werden sowohl Vorteile bekannter Lösungen verbessert, wobei jedoch, die Nachteile der fehlenden Formbeständigkeit und Orientierungsfreiheit, welche durch Extrusion bzw. Blasformen der Folien entstehen, vermieden werden.

Die Erfindung wird im folgenden anhand von Ausführungsbeispielen im Zusammenhang mit der Zeichnung näher erläutert. Es zeigt:

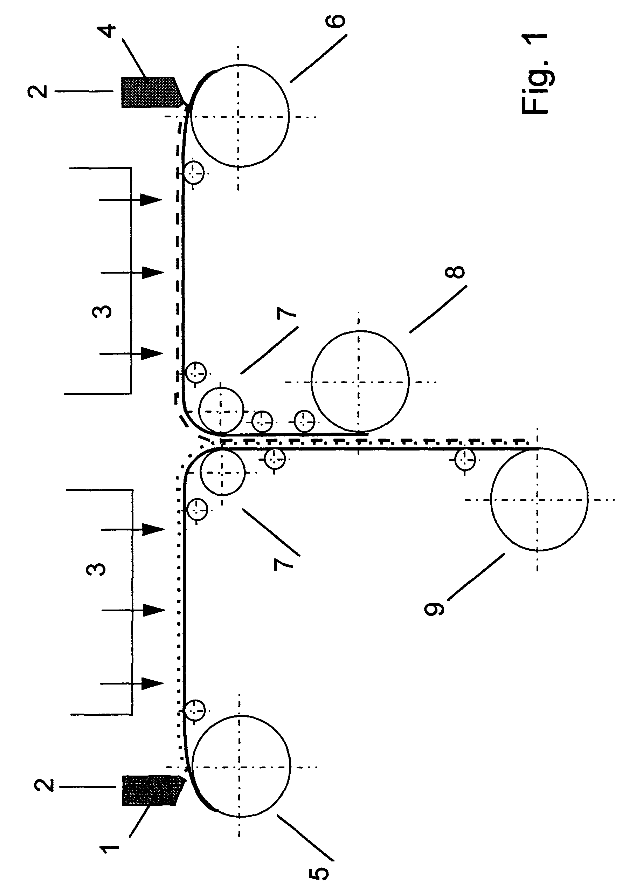

### Figur 1 - eine schematische Darstellung einer Ausführungsform des Herstellungsverfahrens

### Beispiel 1:

Eine Testfolie mit den Abmessungen 10 x 10 cm wurde einer Prüfung auf Formbeständigkeit unter verschiedenen klimatischen Einflüssen unterworfen. Die Ergebnisse sind in Tabelle 1 zusammengefaßt.

**Tabelle 1:**

| Testbedingungen | Zustand | Länge (cm) | Breite (cm) | Dicke (mm) |
|---|---|---|---|---|
| Original | Raumtemp. | 10,0 | 10,0 | 0,035 |
| Lagerung über 30 min in 25°C warmen Wasser | naß | 9,8 | 9,7 | 0,041 |
| | trocken | 9,9 | 9,8 | 0,037 |
| Lagerung über 24 h bei 50°C und 100 % rel. Luftfeucht | warm | 10,1 | 10,1 | 0,034 |
| | Raumtemp. | 10,1 | 10,0 | 0,033 |
| Lagerung über 24 h bei -18°C im Gefrierschrank | Raumtemp. | 10,0 | 10,0 | 0,037 |

### Beispiel 2:

Eine erfindungsgemäße Verbundfolie mit einem Gewicht von 150 g/m², mit einer Foliendicke von 100 um und einem Klebstoffilm von 50 µm wurden, ohne zusätzliche mechanische Bearbeitung, mit stark verdünnten Alkalien und handelsüblichen Industriereinigern aufgelöst. Die Auflösungsgeschwindigkeiten sind in Tabelle 2 zusammengefaßt.

**Tabelle 2:**

| Reiniger | pH-Wert | Ergebnis bei 30°C Waschlös. | Ergebnis bei 60°C Waschlös. | Ergebnis bei 80°C Waschlös |
|---|---|---|---|---|
| 1%ige Soda Lösung | 10,5 | nach 50 s alles gelöst | nach 25 s alles gelöst | nach 20 s alles gelöst |
| 1%ige NaOH Lösung | 12 | nach 50 s alles gelöst | nach 40 s alles gelöst | nach 35 s alles gelöst |
| 0,5%ige EW Pol 9110 Lösung | 8-9,5 | nach 60 s redispergiert | nach 45 s redispergiert | nach 10 s redispergiert |
| 0,5%ige Silex 2005114 M Lösung | 10-11 | nach 60 s alles gelöst | nach 20 s alles gelöst | nach 10 s alles gelöst |
| 0,5%ige P3-mip zentra Lösung | 11 | nach 70 s alles gelöst | nach 20 s alles gelöst | nach 10 s alles gelöst |

### Beispiel 3:

Eine Ausführungsform der erfindungsgemäßen Verbundfolie wurde wie folgt hergestellt.
Auf ein von Rolle 5 kommendes handelsübliches Siliconpapier wurde aus einem Behälter 1 eine wässrige Dispersion mit 50 % Feststoffgehalt eines Acrylat-Copolymerisates für die Folie mittels eines Rakels 2 so aufgetragen, daß die Stärke der trockenen Folie 100 µm betrug.
Nach dem Auftragen wird die Folie in üblicher Weise mit Heißluft bis max. 150°C getrocknet. Analog dazu wird auf ein von Rolle 6 kommendes Siliconpapier eine wässrige Dispersion für den Klebstoffilm mit 55 % Feststoffgehalt aus einem Behälter 4 mittels eines Rakels so aufgetragen, daß die Stärke des trockenen Klebstoffilmes 50 µm betrug und anschließend getrocknet. Anstelle des Auftragens mit einem Rakel, können auch andere übliche Auftragsvorrichtungen oder Dosiereinrichtungen eingesetzt werden. Auch für die Trocknung können andere geeignete Wärmequellen verwendet werden. In einem weiteren Verfahrensschritt wurden die jeweils auf Siliconpapier aufgetragenen Folien und Klebstoffilme mit einer Geschwindigkeit von 0,5 m/s durch ein feststehendes beheiztes Walzenpaar mit planer Oberfläche durchgeführt, daß einem Druck von 200 N/cm² ein fester Verbund von Folie und Klebstoffilm erzeugt wurde. Die Temperatur der Walzen betrug 40°C. Zur Führung der aufgetragenen Folien und des erzeugten Verbundes wurden in der Zeichnung angedeutete übliche Führungsrollen verwendet. Die so erzeugte Verbundfolie wurde, zusammen mit dem Siliconpapier der Folie als Zwischenlage, auf Rolle 9 aufgerollt, während das Siliconpapier des Klebstoffilmes auf Rolle 8 aufgerollt, einer Wiederverwendung zugeführt wird.

### Beispiel 4:

Eine nach Beispiel 3 hergestellte Verbundfolie wurde mit einer Siebschablone bedeckt, und mit einer Rolle wurde Druckfarbe aufgebracht. Die Siebschablone war so gestaltet, daß eine übliche Strichcodierung in verschiedenen Breiten und Abständen entstand.
Nach Trocknen der Druckfarbe wurde die Codierung hinsichtlich genauer Wiedergabe und Verzerrungen geprüft und die Prüfungen nach 24 h und 48 h wiederholt. Im Ergebnis wurden keine Verzerrungen und irreführenden Wiedergabefehler festgestellt.

### Beispiel 5:

Mit Teststreifen von 20 x 30 cm einer nach Beispiel 3 hergestellten Verbundfolie wurden Textilmaterialien von 15 x 25 cm auf eine Holzunterlage und auf ein textiles Kunstfasergewebe fixiert und bei Raumtemperatur 48 h gelagert. Die nachfolgenden Prüfungen ergaben einwandfreie Fixierungen.

### Beispiel 6:

Auf zwei Teststreifen einer erfindungsgemäßen Verbundfolie gem. Beispiel 2 ließ man über 30 min bei Raumtemperatur jeweils 5%ige Essigsäure und verdünnte Phosphorsäure einwirken.
Es konnten keine negativen Veränderungen am Verbund festgestellt werden.

## Patentansprüche

1. Leicht auflösbarer Verbund einer Folie mit einer Stärke von 10 bis 300 µm, vorzugsweise 50 bis 250 µm, aus einem Acrylat-Copolymerisat mit Molmassen von 80.000 bis 300.000 aus 20 bis 30 Gew.% Butylacrylat, 5 bis 10 Gew.% Methacrylsäure, 3 bis 5 Gew.% eines Acrylsäurealkylesters ab 6 C-Atomen und 2 bis 7 Gew.% Termonomeren, wie Styrol und/oder Siloxan, mit einem Klebstofffilm mit einer Stärke von 5 bis 100 µm, vorzugsweise 20 bis 50 µm, aus einem Acrylat-Copolymerisat mit Molmassen von 10.000 bis 120.000 aus 30 bis 50 Gew.% Butylacrylat, 5 bis 10 Gew.% Acrylsäure und aus 1 bis 5 Gew.% Termonomeren, wie Styrol, wobei die maximale Restfeuchte des Verbundes 5 % beträgt, **dadurch gekennzeichnet, dass** der Verbund orientierungsfrei und formbeständig ist.

2. Verfahren zur Herstellung einer leicht auflösbaren Verbundfolie bestehend aus einer Trägerfolie und einem Klebstofffilm gemäß Patentanspruch 1 das folgende Merkmale aufweist,
a) aus einem Behälter (1) wird eine wässrige Dispersion mit 40 bis 60 % Feststoffgehalt eines Acrylat-Copolymerisates für die Trägerfolie mittels eines Rakels (2) auf ein von Rolle (5) kommendes Siliconpapier aufgetragen und mit Heißluft getrocknet,
b) aus einem Behälter (4) wird eine wässrige Dispersion mit 40 bis 60 % Feststoffgehalt eines Acrylat-Copolymerisates für den Klebstofffilm mittels eines Rakels (2) auf ein von Rolle (6) kommendes Siliconpapier aufgetragen und mit Heißluft getrocknet,
c) die jeweils auf Siliconpapier aufgetragenen Trägerfolien und Klebstofffilme werden mit 0,5 m/s durch ein Walzenpaar (7) hindurchgeführt und bei 25 bis 50 °C Walzentemperatur und einem Druck von 200 N/cm² ein fester Verbund von Trägerfolie und Klebstofffilm erzeugt;
d) die Verbundfolie mit dem Siliconpapier wird, von Rolle (5) kommend, als Zwischenlage auf Rolle (9) aufgerollt und
e) das Siliconpapier, von Rolle (6) kommend, wird auf Rolle (8) aufgerollt und einer Wiederverwendung zugeführt.

## Claims

1. Easily dissoluble compound of a sheet material, the thickness of which is 10 µm to 300 µm, preferably 50 µm to 250 µm, made of an acrylate co-polymerisate, its molecular weight ranging from 80,000 to 300,000, comprising - by weight - 20 per cent to 30 per cent of butyl acrylate, 5 per cent to 10 per cent of methacrylic acid, 3 per cent to 5 per cent of an acrylic acid alkyl ester with 6 C atoms or more, and 2 per cent to 7 per cent of termonomers, such as styrene and/or siloxane, with an adhesive film, the thickness of which is 5 µm to 100 µm, preferably 20 µm to 50 µm, made of an acrylate co-polymerisate, its molecular weight ranging from 10,000 to 120,000, comprising - by weight - 30 per cent to 50 per cent of butyl acrylate, 5 per cent to 10 per cent of methacrylic acid, and 1 per cent to 5 per cent of termonomers, such as styrene, while the compound's maximum residual moisture is 5 per cent, **characterized in that** said compound is non-oriented and dimensionally stable.

2. Method for the manufacture of an easily dissoluble compound foil, consisting of a carrier sheet material and an adhesive film according to claim 1, which has the following features:
(a) out of a container (1), an aqueous dispersion, its solid content of 40 per cent to 60 per cent being made up by an acrylate co-polymerisate, is applied by a doctor blade (2) onto silicone paper coming from reel (5), and hot-air dried to produce the carrier sheet;
(b) out of a container (4), an aqueous dispersion, its solid content of 40 per cent to 60 per cent being made up by an acrylate co-polymerisate, is applied by a doctor blade (2) onto silicone paper coming from reel (6), and hot-air dried to produce the adhesive film;
(c) after being applied onto silicone paper, both carrier sheet and adhesive film are fed at a speed of 0.5 m/s through a pair of rollers (7) to form - at a roller temperature of 25 °C to 50 °C and under a pressure of 200 N/cm² - a firm compound of carrier sheet and adhesive film;
(d) the compound foil on silicone paper, coming from reel (5), is wound up on reel (9) as intermediate layer;
(e) the silicone paper, coming from reel (6), is wound up on reel (8) for reuse in the process.

## Revendications

1. Composition facilement dissociable d'une feuille d'épaisseur de 10 à 300 µm, de 50 à 250 µm de préférence, à partir d'un copolymère d'acrylate aux poids moléculaires de 80.000 à 300.000 constitué de 20 à 30 % en poids d'acrylate de butyle, de 5 à 10 % en poids d'acide méthacrylique, de 3 à 5 % en poids d'un ester acrylique d'alkyle à partir de 6 atomes de C et de 2 à 7 % en de termonomères, comme le styrène et/ ou le siloxane, avec une pellicule de colle de 5 à 100 µm, de 20 à 50 µm de préférence, à partir d'un copolymère d'acrylate aux poids moléculaires de 10.000 à 120.000 constitué de 30 à 50 % en poids d'acrylate de butyle, de 5 à 10 % en poids d'acide acrylique et de 1 à 5 % en poids de termonomères, comme le styrène, l'humidité maximale restante de la liaison étant de 5 %, **caractérisée par le fait que** la feuille composite est libre d'orientation et qu'elle est dimensionnellement stable.

2. Procédé de production d'une feuille composite facilement dissociable constitué d'un film support et d'une pellicule de colle selon la revendication du brevet 1, présentant les caractéristiques suivantes,
a) provenant du réservoir (1) une dispersion aqueuse d'une teneur en solide de 40 à 60 % d'un copolymère d'acrylate pour le film support est appliquée au moyen d'une racle (2) sur un papier au silicone venant du rouleau (5) puis est séchée à l'air chaud,
b) provenant du réservoir (4) une dispersion aqueuse d'une teneur en solide de 40 à 60 % d'un copolymère d'acrylate pour la pellicule de colle est appliquée au moyen d'une racle (2) sur un papier au silicone venant du rouleau (6) puis est séchée à l'air chaud,
c) les films supports et les pellicules de colle appliquées toutes deux sur du papier au silicone sont introduits avec 0,5 m/s dans une paire de cylindres (7) pour former une composition ferme entre le film support et la pellicule de colle par une température des cylindres de 25 à 50 °C et une pression de 200 N/cm²;
d) la feuille composite dotée du papier au silicone, venant du rouleau (5), est enroulée comme couche intermédiaire sur le rouleau (9)
e) la papier au silicone, venant du rouleau (6), est enroulé sur le rouleau (8) pour pouvoir être réutilisé plus tard.
